# EUROPÄISCHE PATENTANMELDUNG

(11) **EP 0 826 518 A2**
(43) Veröffentlichungstag der Anmeldung: **04.03.1998**
(21) Anmeldenummer: 97110199.3
(22) Anmeldetag: 21.06.1997
(51) Int. Cl.: B60B 1/08

(54) **Verfahren zum Herstellen eines einteiligen Fahrzeugrades**

(30) Priorität: 27.08.1996 DE 19634535
(71) Anmelder: Dr.Ing.h.c. F. Porsche Aktiengesellschaft, 70435 Stuttgart (DE)
(72) Erfinder: Stoiber, Jochen, 73257 Koengen (DE)

(57) **Zusammenfassung**

Beim Verfahren zum Herstellen eines einteiligen Fahrzeugrades (F) in einem Gußverfahren umfaßt das Rad Hohlspeichen, die jeweils im Nabenbereich (N) und im Hornbereich (H) in einen Ringraum (3) einmünden. Das Fahrzeugrad weist zum Entfernen von Formsand aus den Hohlräumen in den Hohlspeichen zwischen Befestigungsschrauben (8) im Nabenbereich und im Bereich der Hohlspeichen Ausflußöffnungen (5,6) auf.

## Beschreibung

Die Erfindung bezieht sich auf ein Verfahren zum Herstellen eines einteiligen Fahrzeugrades nach dem Oberbegriff des Anspruchs 1.

Aus der EP 0 547 313 B1 ist ein im Gußverfahren hergestelltes zweiteiliges Fahrzeugrad mit Hohlspeichen und Ringräumen bekannt. Damit aus den mit Formsand gefüllten, geschlossenen Räumen des Rades der Formsand problemlos entfernt werden kann, ist das Rad zweiteilig ausgeführt, da hierdurch die Mündungsöffnungen der Hohlräume nach außen hin frei zugänglich sind. Insbesondere bei stark gewölbten Hohlspeichen und verwinkelten Ringräumen ist es meist sehr schwierig und aufwendig, den Formsand restlos aus dem Rad zu entfernen.

Der Erfindung liegt die Aufgabe zugrunde, ein im Gußverfahren hergestelltes einteiliges Fahrzeugrad zu schaffen, das wie ein zweiteilig hergestelltes Fahrzeugrad ausgeführt ist und bei dem ein vollständiges Entfernen des Formsandes aus den Hohlräumen gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Formsand trotz der Einteiligkeit des Rades vollständig aus den geschlossenen Hohlräumen in den Speichen sowie im Bereich der Radnabe und im Bereich des Felgenhorns entfernbar ist. Hierzu dienen mehrere Öffnungen in der Wandung der Hohlspeichen und/oder im Radnabenbereich zwischen den Befestigungsschrauben.

Diese Öffnungen sind vorzugsweise rückseitig der Hohlspeichen und der Radnabe angeordnet. Es können auch mehrere Öffnungen vorgesehen sein. Die Größe der Öffnungen wird entsprechend den Erfordernissen gewählt, wobei eine Geometrie der Öffnungen, sei es rechteckig, viereckig oder dergleichen, frei gewählt werden kann.

Der Formsand kann über die Öffnungen herausfließen, wobei dies auch bei stark gewölbten Hohlspeichen sowie bei verwinkelten Ringräumen möglich ist, in welche die Hohlräume der Speichen einmünden.

Zur Unterstützung des Entfernens des Formsandes aus dem Rad kann dieses zusätzlich in eine Rüttel-, Schwing- bzw. Vibrationsbewegung versetzt werden. Diesem Vorgang kann ein Ausspülvorgang, insbesondere mit Lutf oder einer Flüssigkeit folgen. Es wäre auch möglich, diese Schwing-, Rüttel- und Vibrationsbewegungen zu kombinieren mit einer Luft- oder Flüssigkeitsausspülung.

Die Öffnungen können auch durch die Kernstützungen gebildet werden. Eine Vergrößerung dieser Öffnungen zur problemlosen Abführung des Formsandes ist jederzeit möglich.

Die Öffnungen werden nach dem vollständigen Entfernen des Formsandes aus den Hohlräumen des Rades über Deckel oder sonstige Abschlüsse verschlossen, so daß in keiner Weise eine Beeinträchtigung des Rades in seiner Funktion noch in seiner Lebensdauer erfolgt.

Ein Ausführungsbeispiel der Erfindung ist in der Zeichnung dargestellt und wird im folgenden näher beschrieben.

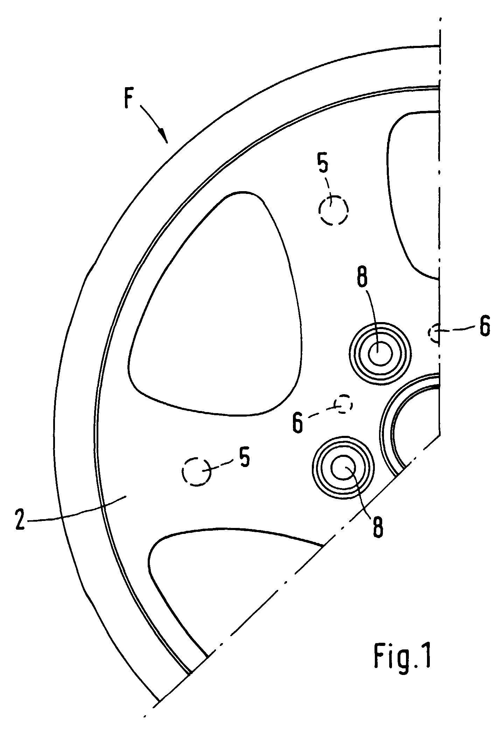

Es zeigen
- Fig. 1: eine Ansicht des einteiligen Fahrzeugrades und

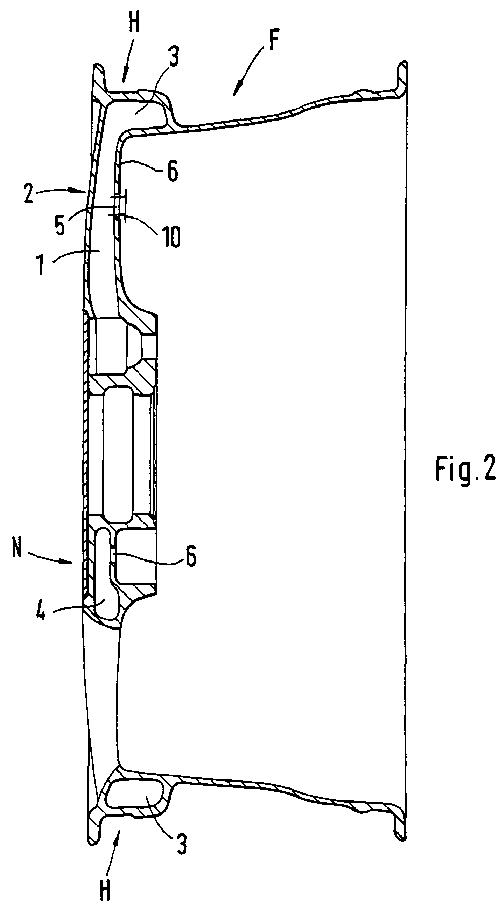

- Fig. 2: einen Schnitt durch das Fahrzeugrad.

Das einteilige Fahrzeugrad F wird in einem Gußverfahren, insbesondere in einem Niederdruckkokillengußverfahren hergestellt. Zum Entfernen des Formsandes aus den Hohlräumen 1 in den Speichen 2 und aus den Ringräumen 3 und 4 im Hornbereich H und im Nabenbereich N des Rades dienen Öffnungen 5 und 6. Es kann sich pro Speiche 2 um eine oder mehrere Öffnungen 5 handeln, die entsprechend durch eine oder mehrere Öffnungen 6 ergänzbar sind.

Die Öffnungen 5 sind vorzugsweise jeweils in den hinteren Wandungen 6 der Hohlspeichen 2 angeordnet, wobei je nach Design auch in der vorderen Wandung Öffnungen vorgesehen sein können. Die geometrische Form der Öffnungen 5 ist je nach den Erfordernissen gestaltet. Desweiteren können zusätzlich die Öffnungen 6 zwischen den Befestigungsschrauben 8 angeordnet werden. Diese Öffnungen 8 können sich ebenfalls an der Rückseite und/oder auch an der Vorderseite des Rades befinden.

Der Abschluß der Öffnungen 5 und 6 erfolgt mittels eines Deckels 10 oder eines sonstigen Abschlußstopfens, was nicht näher dargestellt ist.

## Patentansprüche

1. Verfahren zum Herstellen eines einteiligen Fahrzeugrades in einem Gußverfahren, wobei das Rad Hohlspeichen umfaßt, die jeweils im Nabenbereich und im Hornbereich in einen Ringraum einmünden, dadurch gekennzeichnet, daß das Fahrzeugrad (F) zum Entfernen von Formsand aus Hohlräumen (1, 3 und 4) in den Hohlspeichen (2) und/oder zwischen Befestigungsschrauben (8) im Nabenbereich (N) Ausflußöffnungen (5, 6) aufweist.

2. Verfahren nach Anspruch 1, dadurch gekennzeichnet, daß das Fahrzeugrad (F) zum Entfernen des Formsandes aus den Hohlräumen (1, 3 und 4) in eine Rüttel- bzw. Vibrationsbewegung versetzt wird.

3. Verfahren nach den Ansprüchen 1 oder 2, dadurch gekennzeichnet, daß die Hohlräume (1, 3 und 4) des Fahrzeugrades (F) nach dem Rüttel- bzw. Vibrationsvorgang mit Luft und/oder einer Flüssigkeit ausgespült werden.

4. Fahrzeugrad nach den Ansprüchen 1, 2 oder 3, dadurch gekennzeichnet, daß die Öffnungen (5, 6) in den Hohlspeichen (2) und/oder im Radnabenbereich (N) einen Verschlußdeckel (10) aufweisen, der eingeklemmt in den Öffnungen gehalten ist.
